# EUROPEAN PATENT APPLICATION

(11) **EP 0 972 633 A1**
(43) Date of publication of application: **19.01.2000**
(21) Application number: 98830421.8
(22) Date of filing: 14.07.1998
(51) Int. Cl.: B32B 27/26, B32B 27/32, B32B 27/42, C08K 3/00, C08L 23/16, C08L 23/06, C08L 83/07, C08G 77/20, C08F 32/00, H01B 3/46, C08L 83/04

(54) **Multilayer products comprising silicone compounds and a process for their production**

(71) Applicant: COMMER S.p.A., 84061 Ogliastro Cilento (Salerno) (IT)
(72) Inventor: Dante, Siano, 20093 Cologno Monzese (MI) (IT)
(74) Representative: Gislon, Gabriele

(57) **Abstract**

A multilayer product comprises a polyolefin-based first layer (3) and a second layer (4) containing a silicone polymer; the two layers are adhered to each other by inserting a polyolefin polymer into the second layer whose weight is from 3% to 80% of the total weight of the polymer mixture in the second layer.

## Description

The present invention relates to multilayer products comprising a silicone-based layer and to the process for their production.

In particular, the invention relates to products comprising a layer based on silicon compounds and a layer based on polyolefins e.g. polyethylene.

Multilayer products comprising a layer based on silicone compounds and a layer based on polyolefin are known in the art; an example of such products is the electric cables used in certain environments e.g. the electric cables used in engine compartment of road vehicles. In these cables the polyolefin layer has the function of an electrical insulator and is covered by a silicone-polymer based layer which protects the polyolefin layer from the environment of lubricant, fuel vapor, and other substances which attack polyolefins in a high temperature environment.

The main problem in the production of this type of multilayer product (two or more layers) is the very low adhesion between the polyolefin and silicone layers. This lack of adhesion results in quick degradation of the characteristics of the final product.

Modification of the polyolefin layer by silanization has been suggested to increase the adhesion and make it compatible with the silicone layer; further research is being done along these lines to improve the results obtained so far, and in particular to reduce the cost of the final product. Another problem is the fireproofing of multilayer products.

It is an aim of the present invention to resolve the aforementioned problems and provide low-cost multilayer products with good adhesion between the silicone and polyolefin layers.

A multilayer product according to Claim 1 is an object of the present invention.

According to a preferred aspect, the silicone layer of the multilayer product of the invention contains at least one polyolefin polymer in a range 30% to 60% of the total weight of the polymer mixture. Preferably, both the silicone and the polyolefin-based layers should also comprise 0.1 to 7.0 phr (per hundred rubber, where rubber means the polymer mass in the mixture) of a radical-generator, preferably of the peroxide type, to cross-link the polymers.

A further object of the invention is a process for the production of multilayer products according to Claim 7.

According to a preferred aspect of the invention, the process provides for the mixing of a peroxide, or a similar agent to generate radicals, with the silicone polymer starting material and, separately, mixing of the said agent with the polyolefin polymer. Subsequently, the two polymers containing the radical agent are mixed together in their turn to give the required formulation for the silicone layer.

Another object of the invention is a formulation of the silicone polymer according to Claim 10.

Another object of the invention is electric cable according to Claim 14.

The invention will now be described in detail with reference to the attached drawing, which shows a portion of electric cable provided with a covering consisting of a multilayer product according to the present invention.

In the following description electrical cable will be referred to as an example of a device which incorporates a multilayer product according to the present invention, but it should be understood that the protection is not limited to cables alone but extends to all products which provide for the use of layer of polyolefin mated to a layer containing silicone polymers.

The cable 1 in the figure comprises in a way already known a bundle 2 of wire conductors, primary insulation 3 and secondary insulation 4, which constitutes the external covering of the cable. The internal layer or primary insulation 3 is produced from a cross-linkable polyolefin e.g. polyethylene, containing a peroxide or other agent which would cross-link the polyolefin; polyolefins suited to this purpose are known in the art and among these is the linear polyethylene LE4201from Borealis.

The second (external) layer 4, is made from a formulation which, according to the invention, comprises at least one silicone polymer at a concentration of between 3% and 80% of the weight of the polymer mixture in the second layer.

The material from which the external insulation is made also provides in its pre-vulcanized state for a radical-generating agent such as peroxide at a concentration of between 0.1 and 7.0 phr.

In both layers 3 and 4, the peroxide or other radical generating agent is present as such when the multilayer covering is in a pre-vulcanized condition i.e. before the cross-linking phase.

The silicone polymer used is preferably a cross-linkable silicone rubber, known as such in the art, which comprises units according to the following formula:

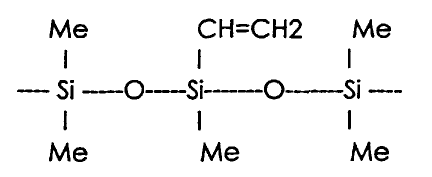

Examples of silicone polymers of this type suited to application in the present invention are those known as Silopren ® from Bayer, and Silastic ® marketed by Dow Corning. The silicone polymer has a radical-generating agent added to it as described above and in its pre-vulcanized state it contains from 0.1 to 7.0 phr of such radical generators. The polyolefin polymer that is mixed with the silicone polymer is present in concentrations of between 3% and 80% of the total polymer weight, preferably between 30% and 66% and even more preferably between 40% and 50%.

Polyolefins suited to this purpose are low-density polyethylenes i.e. polyethylenes up to 0.86 Kg/l . Examples of suitable polyolefines are ethylene-octene copolymers such as Engage 8003 from DuPont-Dow Elastomers and the EP(D)M rubbers such as TER 4038 ® from Enichem Elastomers.

This polyolefin polymer also presents, in its pre-vulcanized condition, a concentration of radical-generating agents within the range of 01 to 7.0 phr to carry out the cross-linking the polymer during the vulcanization in order to give the same the required mechanical properties. Preferred cross-linking agents for silicone and polyolefin polymers are the peroxides such as dicumil peroxide.

The mixture which constitutes layer 4 also preferably contains a stabilizer to prevent radical chain reactions propagating and causing incipient cross-linking of the mixture during its processing phases prior to vulcanization (scorch). The quantity of stabilizer is generally within the range of 0.01 to 0.20 phr. Examples of suitable stabilizers are blocked phenols such as Irganox 1035 from Ciba-Geigy and Anox 70 and Anox 20 from the Great Lakes Chemicals.

Other coloring, fire-retardant and inert components are present up to 240 phr. Known master fire-retardant containing bromide and antimony oxide compounds can be used; such a master is present in the formulation in quantities ranging from 5 to 15 phr.

A preferential component to give fire-retardant properties to the formulation according to the invention comprises melamine and a non-peroxide radical generator agent. In more detail, the quantity of melamine added ranges from 5 to 60 phr and preferably it is about 40 phr and the quantity of radical generator agent is between 1 and 6 phr and preferentially about 4 phr. The non-peroxide radical initiator is an initiator with an activation temperature higher than the vulcanization temperature of the mixture, i.e. higher than the activation temperature of the peroxide initiators, so that it is not activated during vulcanization but only on exposure to higher temperatures, e.g. about 300°C. An example of such type of initiator is 2,4-dimethyl-2,4-diphenylbutane.

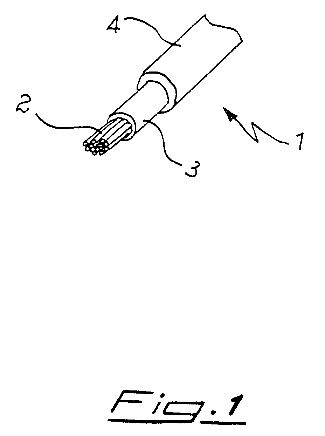

The process for the preparation of the multilayer products according to the invention provides for the preparation in a known way of the base polyolefin layer i.e. layer 3 in fig.1, to which the external silicone layer 4 must adhere. The silicone layer 4 is prepared by mixing together one or more silicone polymers with at least one polyolefin polymer in the ratio of polyolefin polymer: silicone polymer within the range of 3: 97 to 80: 20, i.e. the percentage of polyolefin polymer in the total polymer mixture is between 3% and 80%.

The addition of radical generator agents can occur before or after the mixing of the polyolefin and silicone polymers, but preferably after the addition of other components present. Preferably the required quantity of peroxide or other cross-linking agent is added and mixed in separately to the polyolefin and silicone polymers. This step can be carried out by adding and mixing the peroxide to each polymer i.e. the peroxide is added to the polyolefin polymer and is mixed into it, and then the peroxide is added to the silicone polymer and mixed into it - extruding it to get the required degree of dispersion. The two polymers containing the peroxide are subsequently mixed together.

In a further embodiment of the process, the polyolefin polymer is mixed with the required amount of peroxide (0.1-7.0) and then to this mixture is added the silicone polymer with the required amount of peroxide. These operations can be advantageously carried out on the same machine e.g. an extruder fed along the cylinder. In this case the polyolefin polymer and its peroxide are fed at the beginning of the cylinder and the silicone polymer and its peroxide are fed along the cylinder.

In all cases the mixing should be carried out in such a way as not to activate the peroxide at this mixing stage, and should give a final mixture whose formulation comprises the silicone polymer, the polyolefin polymer, the radical-generating agent and the other components in the ratios indicated above.

This mixture is then processed to obtain the desired product and finally vulcanized to give it the required properties.

To produce the electric cable shown in Fig.1 the bundle of conductors is co-extruded with the primary insulation or the first polyolefin-based layer, 3, and with the external layer or second layer containing the mixture of silicone polymer and polyolefin polymer, 4. Then vulcanization is carried out.

The finished product has two distinct but perfectly adhering layers. Furthermore, despite the presence of the polyolefin polymer, the layer containing the silicone polymer retains optimum physical and mechanical properties, and resistance to solvents, oils and hydrocarbons, contrary to what the skilled man might have believed.

## Claims

1. Multilayer product comprising a first layer (3) based on polyolefins and a second layer (4) containing one or more silicone polymers, characterized in that said second layer further comprises at least one polyolefin polymer within the range of 3% to 80% of the total weight of the polymer mixture.

2. A product according to Claim 1, wherein the second layer (4) in a prevulcanization condition, comprises a radical-generating agent within the range of 0.1 to 7.0 phr.

3. A product according to Claim 1 or 2, wherein the quantity of the said polyolefin polymer in the second layer (4) is within the range of 30% to 60% of the total weight of polymers.

4. A product according to any previous claims, wherein said polyolefin polymer is selected from polyethylenes, EP(D)M rubbers and mixtures thereof.

5. A product according to any Claim 2 to 4, wherein said second layer (4) comprises up to 0.20 phr of a stabilizer and up to 240 phr of inert and/or fire-retardant components.

6. A product according to Claim 5, wherein said second layer further comprises 5 to 60 phr of melamine and 1 to 6 phr of one or more non-peroxide radical-generating agents.

7. A process for the production of multilayer products comprising a first layer (3) based on polyolefin and a second layer (4) containing one or more silicone polymers, characterized by the said second layer being obtained by mixing one or more silicone polymers with at least one polyolefin polymer, the quantity of polyolefin polimer being within the range of 3% to 80% of the total weight of the polymer mixture of the second layer (4).

8. A process according to Claim 7, further comprising the step of adding from 0.1 to 7.0 phr of a radical-generating agent to the mixture of said silicone and polyolefin polymers.

9. A process according to Claim 8, further comprising the steps of adding said radical-generator separately to the silicone and polyolefin polymers, and by mixing together said polymers containing said radical-generator in conditions such as not to activate the said radical-generating agent.

10. A formulation of silicone polymer characterized by comprising at least one polyolefin polymer said polyolefin polymer being within the range of 3% to 80% of the total polymer weight.

11. A formulation according to Claim 10, further comprising, in a pre-vulcanization condition, between 0.1 and 7.0 phr of a radical-generating agent and up to 0.20 phr of at least one stabilizer.

12. A formulation according to Claim 10 or 11, further comprising between 5 to 60 phr of melamine and 1 to 6 phr of a non-peroxide radical-generating agent.

13. A formulation according to Claims 9 or 10, wherein said polyolefin polymer is selected from polyethylenes, EP(D)M rubber and mixtures of thereof.

14. Electric cable, characterized by having the conductors (2) covered by a multilayer product (3, 4) according to any of Claims 1 to 6.

15. Silicone polymer, characterized by comprising from 5 to 60 phr of melamine and from 1 to 7 phr of a non-peroxide radical-generating agent.
